# EUROPEAN PATENT APPLICATION

(11) **EP 4 329 314 A1**
(43) Date of publication of application: **28.02.2024**
(21) Application number: 22198923.9
(22) Date of filing: 30.09.2022
(51) Int. Cl.: H04N 21/2187, G06F 3/0482, H04N 21/422, H04N 21/431, H04N 21/472, H04N 21/482, H04N 21/222, H04N 21/254, H04N 21/266, H04N 21/84

(54) **CONTENTS NAVIGATION METHOD FOR OTT SERVICE OF HETEROGENEOUS CONTENTS**

(30) Priority: 22.08.2022 KR 20220104695
(71) Applicant: Aloys Inc, Gyeonggi-do 13438 (KR)
(72) Inventor: CHOI, Sung Hyeok, 16318 Suwon-si, Gyeonggi-do (KR); KIM, Kyung Hun, 13640 Seongnam-si, Gyeonggi-do (KR)
(74) Representative: Hoefer & Partner Patentanwälte mbB

(57) **Abstract**

The present invention generally relates to a technology that enables a user to effectively navigate contents in OTT service of various kinds of contents. Particularly, the present invention relates to a contents navigation technology for OTT service of heterogeneous contents, in which universal contents search is performed on a plurality of heterogeneous contents of OTT service, then the search result is hierarchically presented by categories and attribute groups, and when a live channel is highlighted by remote control operation performed on the result screen of the universal contents search, thumbnail instant viewing about the currently broadcasting video stream of the corresponding live channel is provided.

## Description

### BACKGROUND OF THE INVENTION

### Field of the Invention

The present invention generally relates to a technology that enables a user to effectively navigate contents in OTT service of various kinds of contents.

Particularly, the present invention relates to a contents navigation technology for OTT service of heterogeneous contents, in which universal contents search is performed on a plurality of heterogeneous contents of OTT service, then the search result is hierarchically presented by categories and attribute groups, and when a live channel is highlighted by remote control operation performed on the result screen of the universal contents search, thumbnail instant viewing about the currently broadcasting video stream of the corresponding live channel is provided.

### Description of the Related Art

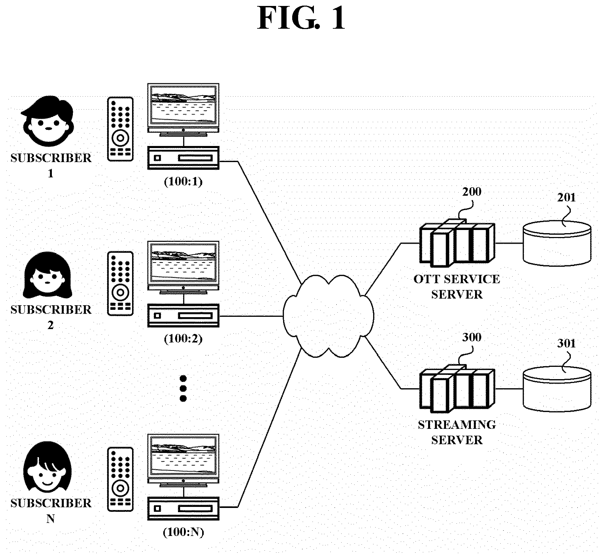

Recently, users who enjoy multimedia contents in an over-the-top (OTT) environment are increasing. FIG. 1 is a diagram illustrating a conventional OTT service environment. Referring to FIG. 1, the OTT service environment includes a plurality of OTT devices 100, an OTT service server 200, and a streaming server 300.

The OTT device 100, which is a device disposed in a subscriber space (e.g., living room, store) of the OTT service, receives contents stream from the streaming server 300 through a network and plays the contents stream to a subscriber. In this case, the OTT device 100 may be implemented by an OTT terminal, a smartphone, an IP set top box, and the like. The OTT service server 200 is a device which manages OTT service as a whole, and stores and manages information of OTT service subscribers in a database 201. The streaming server 300 is a device which provides contents streaming to the subscribers in the OTT environment. The streaming server 300 manages information about live broadcasting channels in a contents database 301.

Meanwhile, in the OTT service, generally about 100 to 200 live channels are provided to the subscribers, and the subscribers may enjoy rich contents through this. In addition to the live channels, the OTT service enables the subscribers to enjoy Video-On-Demand (VOD) contents or contents in a storage.

The subscribers can enjoy various and rich contents through such system, but there are also disadvantages associated with it. Because so many various kinds of contents are provided, users feel difficulties in the process of selecting contents to watch. Particularly, in the case of the OTT terminal, a menu is operated with a remote control, and the remote control is a very inconvenient device for precise operation. Accordingly, using the remote control, a user sequentially changes live channels, inquires an electronic program guide (EPG), or inquires recently viewed channels (Favorite Channels). The OTT service provides rich contents, but the users are not enjoying them.

The prior arts of the present invention are as below.
(1) Korean Published Patent No. 10-2017-0132867 (2017.12.04) "methods and systems for generating cluster-based search results"
(2) Korean Published Patent No. 10-2019-0135530 (2019.12.06) "system and method for presenting search result from many sources"

### SUMMARY OF THE INVENTION

An object of the present invention is to provide a technology that enables a user to effectively navigate contents in OTT service of various kinds of contents.

Particularly, an object of the present invention is to provide a contents navigation technology for OTT service of heterogeneous contents, in which universal contents search is performed on a plurality of heterogeneous contents of OTT service, then the search result is hierarchically presented by categories and attribute groups, and when a live channel is highlighted by remote control operation performed on the result screen of the universal contents search, thumbnail instant viewing about the currently broadcasting video stream of the corresponding live channel is provided.

In order to achieve the above objects, the present invention provides a contents navigation method for OTT service of heterogeneous contents, which comprising: providing OTT service for a plurality of heterogeneous contents to the OTT device of a subscriber; identifying contents search request by user operation on the OTT device; performing universal contents search according to search conditions input by the user for the plurality of contents provided by the OTT service; hierarchically presenting the result of the universal contents search by categories and attribute groups; identifying highlight of a specific live channel by remote control operation performed on the result screen of the universal contents search; decoding video steam currently broadcasting in a live channel in response to user selection operation on the highlighted live channel; providing thumbnail instant viewing for the highlighted live channel on the result screen of the universal contents search; and providing contents of the highlighted live channel to main display in response to user selection operation on the display of the thumbnail instant viewing.

The contents navigation method may further comprise: removing the thumbnail instant viewing in response to an arrow key operation of the user on a display screen to which the thumbnail instant viewing is provided; and changing the highlight of a live channel in response to the direction of the arrow key operation.

A computer program according to the present invention is stored in a medium in order to execute a contents navigation method for OTT service of heterogeneous contents which has been set forth above by being combined with hardware.

### BRIEF DESCRIPTION OF THE DRAWINGS

FIG. 1 is a diagram illustrating a conventional OTT service environment.
FIG. 2 is a flowchart illustrating a contents navigation process for OTT service according to the present invention.
FIGs. 3 to 9 are diagrams illustrating examples of a result of universal contents search in the present invention.
FIGs. 10 to 13 are diagrams illustrating examples of thumbnail instant viewing in the present invention.

### DESCRIPTION OF EMBODIMENTS

Hereinafter, the present invention will be described in detail with reference to the drawings.

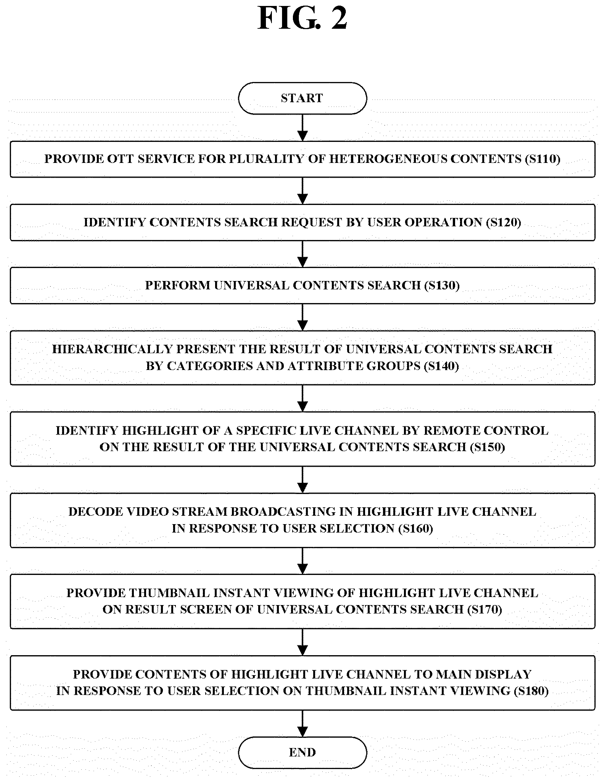

FIG. 2 is a flowchart illustrating a contents navigation process for OTT service according to the present invention.

The present invention is a process performed by an OTT device 100 and an OTT service server 200 such that a user (OTT subscriber) can effectively navigate contents in OTT service environment providing various kinds of contents belonging to a plurality of categories. According to the present invention, even when a user uses an inconvenient operation device such as a remote control, it is possible to conveniently find contents to be watched by the user.

Hereinafter, a contents navigation process for OTT service according to the present invention will be described in detail.

### (S110, S120):

First, OTT service for a plurality of contents heterogeneous from each other belonging to a plurality of categories is provided to an OTT device 100 of a subscriber. A user (subscriber) watches multimedia contents through the OTT service, and in this process, contents search is requested by inputting user operation to the OTT device 100 through a remote control or the like.

An example of the user operation input for the contents search by the user will be described. The user may start contents search by selecting a search icon on a display screen or operating color keys of a remote control. As a method of inputting contents search conditions, a keyword may be input through an on-screen keyboard, a keyword may be selected in a search history list, or voice search may be operated.

### (S130, S140):

When an OTT service server 200 identifies the contents search request of the user, the OTT service server 200 performs universal contents search according the search conditions input by the user on a plurality of contents which are provided by the OTT service, for example, contents managed in a contents database 301 and, preferably, contents stored in a web disk, a local disk, or the like by a user. Then, the result of the universal contents search is hierarchically presented by categories and attribute groups.

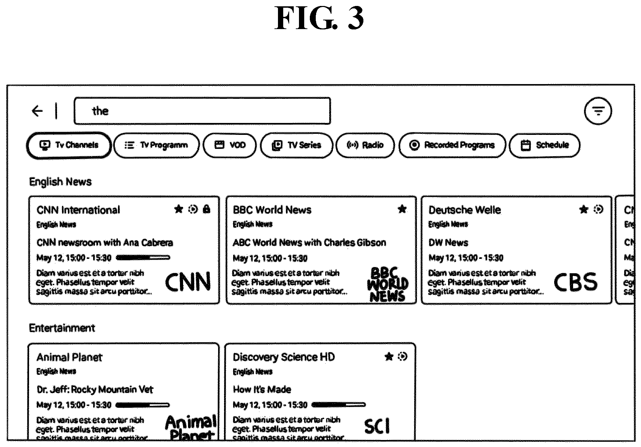

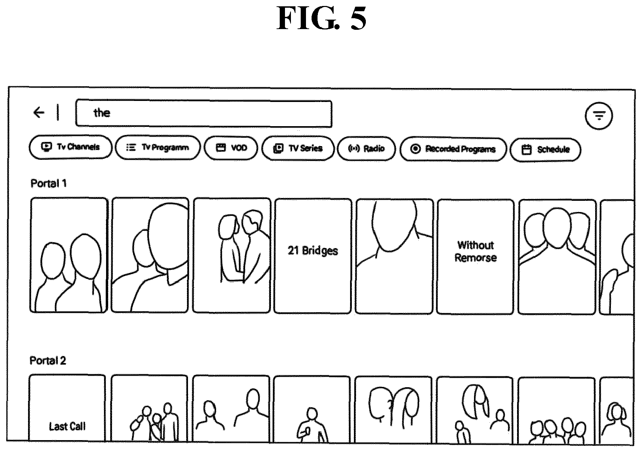

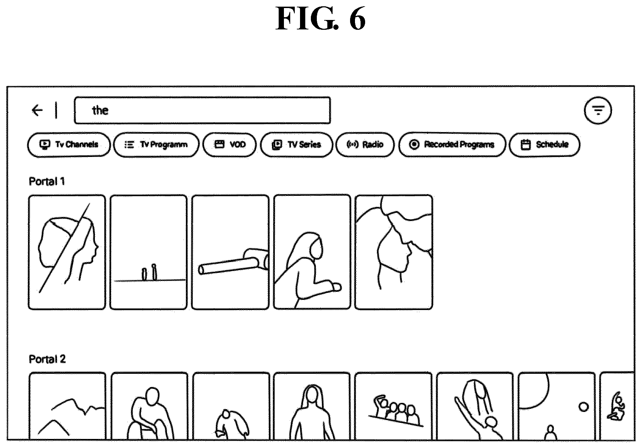

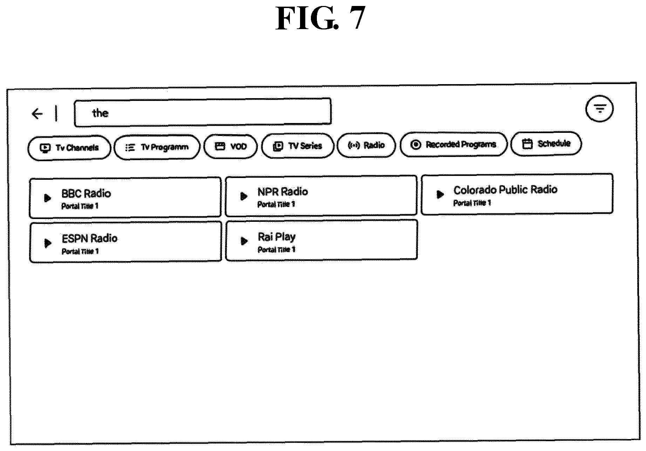

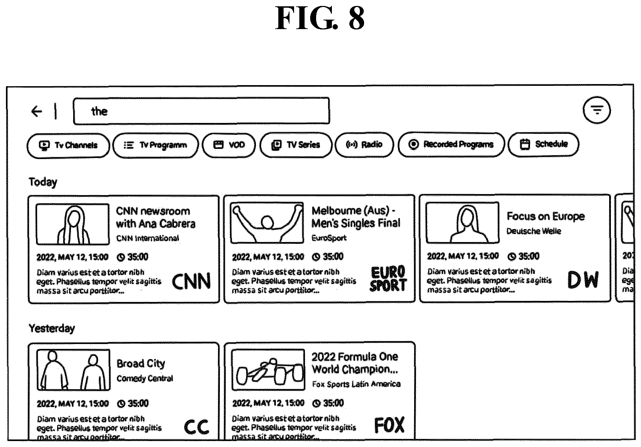

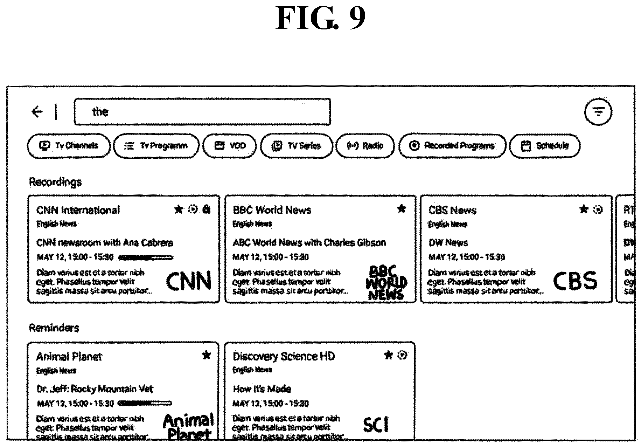

FIGs. 3 to 9 are diagrams illustrating examples of the results of the universal contents search in the present invention. As illustrated in FIGs. 3 to 9, the results of the universal contents search are displayed in tabs by category. In the present specification, seven (7) categories, i.e., TV channels, TV programs, VOD, TV series, Radio, Recorded Programs, and Schedule are used. It may be determined from metadata of contents to which category each contents belongs.

These drawings illustrate display forms of the search results when a user selects these categories one by one. Rather than sequentially presenting in this way, it is preferable to first display the search results of the category corresponding to the context in which the contents search is initiated. For example, when a user searches for contents while watching a live channel, a search result of a category related to the live channel is displayed at the top. The live channel corresponds to TV channels, TV programs, and Radio in the example illustrated in FIG. 3.

In the prior art of the OTT service, a search is provided only for each category. For example, while watching a live channel, only search results for the live channel have been provided, and while using VOD contents, only search results for the VOD contents have been provided.

In the present invention, search results for all categories such as TV channels, TV programs, and VOD are provided. In this case, since the search results are too verbose, and it may make it difficult for a user to select contents. Accordingly, in the present invention, the universal search results are classified and provided by attribute group again. A category corresponds to main category for contents, and an attribute group corresponds to sub-category for contents. The attribute group is a sub-category for each category. In FIG. 3, English News, Entertainment, and the like correspond to the attribute groups.

In the present invention, an embodiment hierarchically presenting the result of the universal contents search by categories and attribute groups is described.

First, a category list as a main category and an attribute group list as a sub-category are set for contents classification. For example, in the present specification, the category list includes TV channels, TV programs, VOD, TV series, Radio, Recorded Programs, and Schedule, and the attribute group list includes English News, Entertainment, Now Playing, Portal, Today, Yesterday, Recordings, and Reminders. It is general that the attribute group list is set differently in accordance with category, and the attribute group list may not exist for some categories.

Next, the plurality of contents lists obtained as the result of the universal contents search are classified on which category and which attribute group they belong to on the basis of metadata of video data. Then, the category list is displayed in tabs in a first direction (horizontal direction) on a display screen. Referring to FIG. 3, seven (7) categories are displayed in tabs in the horizontal direction.

A specific category item is selected in response to user selection on a specific tab among them, and an attribute group list as a sub-category of the selected category item is identified. For example, in the case illustrated in FIG. 3, the category of TV channels is selected, and the attribute group lists of English News and Entertainment are identified as the sub-category of the category of TV channels.

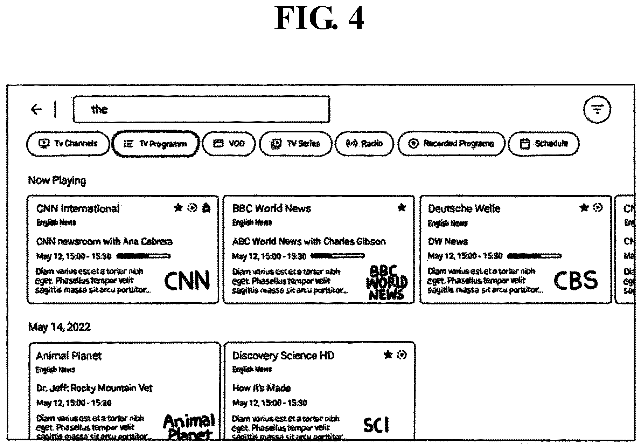

The OTT service server 200 identifies a plurality of contents items corresponding to the selected category item (e.g., in FIG. 3, category of TV channels, and in FIG. 4, category of TV programs) among the plurality of contents lists obtained as the result of the universal contents search, by identified attribute group list. In this case, metadata associated with video data of each contents item is used. The identified attribute group lists are separately displayed in a second direction (vertical direction) different from the first direction (horizontal direction) on the display screen. The plurality of identified contents items are grouped in accordance with the identified attribute group lists and are displayed in a third direction (horizontal direction) different from the second direction (vertical direction) on the display screen.

In this case, the user may change the selection of the category item (i.e., reselect the category item) by operating arrow keys of the remote control. Preferably, a category item is selected in the category list in response to arrow key operation to the first direction (horizontal direction) in a user selection state on the specific tab. Referring to FIG. 3 and FIG. 4, in a state where the category of TV channels is selected, the user operates a right arrow key of the remote control, thereby changing the state to a state where the category of TV programs is selected.

When the category item is selected in this way, the attribute group list as the sub-category of the selected category is identified. Referring to FIG. 4, display of the attribute group lists is changed to Now Playing, and May 14, 2022. Then, a plurality of contents items corresponding to the selected category item (e.g., TV programs) among the plurality of contents lists obtained as the result of the universal contents search are identified by identified attribute group list (e.g., Now Playing, and May 14, 2022). The identified attribute group lists are separately displayed in the second direction (vertical direction) different from the first direction (horizontal direction) on the display screen. Then, the plurality of identified contents items are grouped in accordance with the identified attribute group list and are displayed in the third direction (horizontal direction) different from the second direction (vertical direction) on the display screen.

### (S150 to S170):

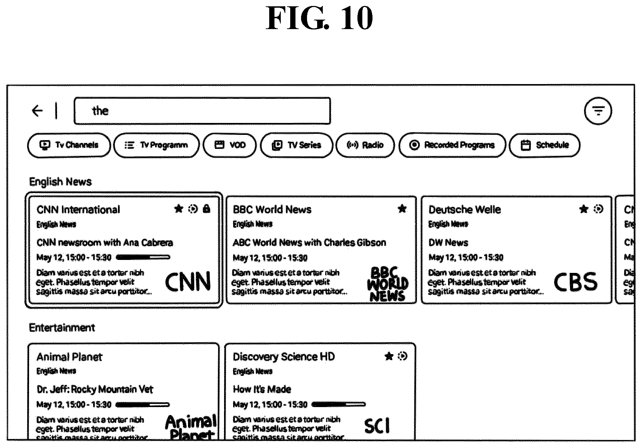

Hereinafter, thumbnail instant viewing will be described with reference to FIGs. 10 to 13.

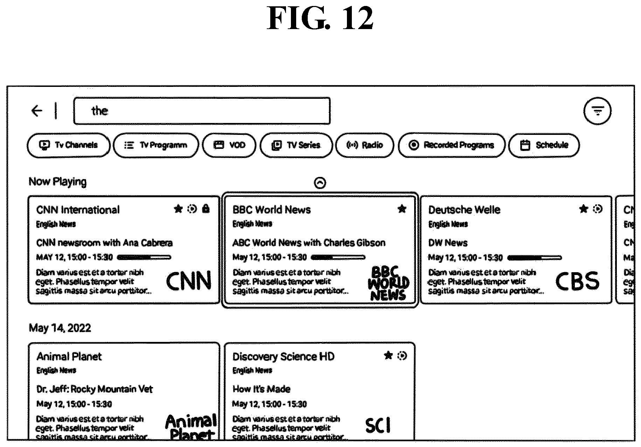

When a user operates a remote control on the result screen of the universal contents search as illustrated in FIGs. 3 to 9, a specific live channel may be highlighted, which is identified by the OTT service server 200. FIG. 10 illustrates a state where a CNN International live channel belonging to the attribute group of English News of the category of TV channels is highlighted. FIG. 12 illustrates a state where a BBC World News live channel belonging to the attribute group of Now Playing of the category of TV programs is highlighted.

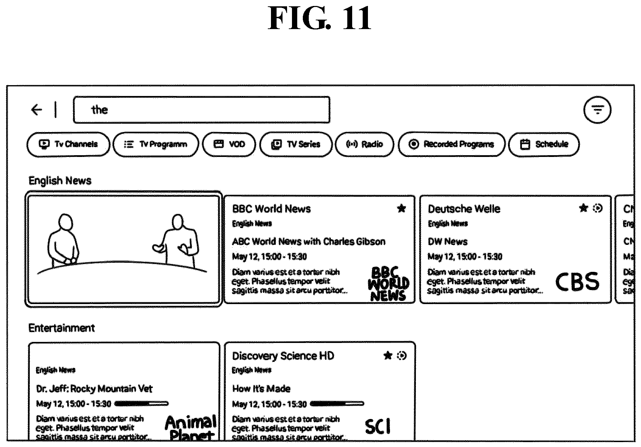

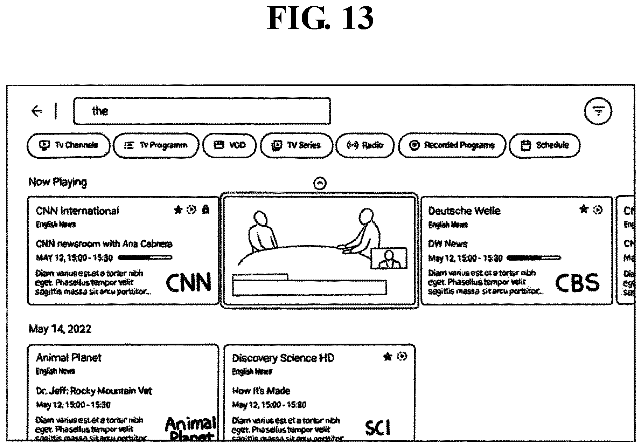

When the user operates a arrow key operation in the third direction (horizontal direction), the highlight target of the live channel may be changed. For example, when the user applies selection operation on the highlighted live channel, for example, pressing an OK button of the remote control, the OTT device 100 decodes the video stream currently broadcasting in the live channel, and then provides thumbnail instant viewing for the highlight live channel on the result screen of the universal contents search as illustrated in FIG. 11 and FIG. 13. FIG. 11 illustrates thumbnail instant viewing when the user presses the OK button of the remote control in the state of FIG. 10, and FIG. 13 illustrates thumbnail instant viewing when the user presses the OK button of the remote control in the state of FIG. 12.

### (S180):

Then, when the user applies selection operation such as pressing the OK button of the remote control on the display of the thumbnail instant viewing illustrated in FIG. 11 and FIG. 13, the OTT device 100 provides contents of the highlight live channel to a main display (e.g., full screen display screen configuration).

Meanwhile, when the user presses the arrow key of the remote control on the display of the thumbnail instant viewing illustrated in FIG. 11 and FIG. 13, the display of the thumbnail instant viewing is removed (disappeared), and the highlight target is moved to the other live channel in response to the direction of the arrow key of the remote control.

Meanwhile, the present invention may be implemented in the form of computer-readable codes on a computer-readable non-volatile recording medium. Various types of storage devices exist as such non-volatile recording medium, for example, hard disk, SSD, CD-ROM, NAS, magnetic tape, web disk, cloud disk, and the like. In addition, the present invention may also be implemented in the form in which codes are distributed, stored, and executed in a plurality of storage devices connected through a network. In addition, the present invention may be implemented in the form of a computer program stored in a medium to execute a specific procedure in combination with hardware.

According to the present invention, there is an advantage in that a user can effectively find contents to be watched by the user in the OTT service, thereby greatly improving user convenience.

In particular, according to the present invention, there is an advantage that the user can effectively find contents to be watched even when an inconvenient operation device such as a remote control is used.

While the present invention has been described with respect to the specific embodiments, it will be apparent to those skilled in the art that various changes and modifications may be made without departing from the spirit and scope of the invention as defined in the following claims.

## Claims

1. A contents navigation method for OTT service of heterogeneous contents, the method comprising:
providing OTT service for a plurality of heterogeneous contents to the OTT device of a subscriber;
identifying contents search request by user operation on the OTT device;
performing universal contents search according to search conditions input by the user for the plurality of contents provided by the OTT service;
hierarchically presenting the result of the universal contents search by categories and attribute groups;
identifying highlight of a specific live channel by remote control operation performed on the result screen of the universal contents search;
decoding video steam currently broadcasting in a live channel in response to user selection operation on the highlighted live channel;
providing thumbnail instant viewing for the highlighted live channel on the result screen of the universal contents search; and
providing contents of the highlighted live channel to main display in response to user selection operation on the display of the thumbnail instant viewing.

2. The contents navigation method of claim 1, wherein the method further comprises:
removing the thumbnail instant viewing in response to an arrow key operation of the user on a display screen to which the thumbnail instant viewing is provided; and
changing the highlight of a live channel in response to the direction of the arrow key operation.

3. The contents navigation method of claim 1, wherein the hierarchically presenting includes:
setting a category list as a main category and an attribute group list as a sub-category for contents classification;
classifying a plurality of contents lists obtained as the result of the universal contents search by categories and attribute groups in referring to metadata;
displaying the category list in tabs in a first direction on a display screen;
selecting a specific category item in response to a user selection on a specific tab;
identifying an attribute group list as a sub-category of the selected category item;
identifying a plurality of contents items corresponding to the selected category item among the plurality of contents lists by the identified attributed group list;
separately displaying the identified attribute group lists in a second direction on the display screen, wherein the second direction is different from the first direction;
grouping the plurality of identified contents items in accordance with the identified attribute group list; and
displaying the grouped plurality of identified contents items in the first direction on the display screen.

4. The contents navigation method of claim 3, wherein the hierarchically presenting further includes:
reselecting a category item in the category list in response to an arrow key operation to the first direction in a user selection state on the specific tab;
identifying an attribute group list which is a sub-category of the reselected category item;
identifying a plurality of contents items corresponding to the reselected category item among the plurality of contents lists for each of the identified attribute group list;
separately displaying the identified attribute group lists in the second direction on the display screen;
grouping the plurality of identified contents items in accordance with the identified attribute group list; and
displaying them on the display screen in a third direction on the display screen, wherein the third direction is different from the second direction.

5. The contents navigation method of claim 4,
wherein the first direction and the third direction are horizontal direction of the display screen,
wherein the second direction is vertical direction of the display screen, and
wherein the remote control operation of the identifying highlight includes arrow key operation to the third direction.

6. A non-transitory computer program contained in a non-transitory storage medium comprising program code instructions which execute a contents navigation method for OTT service of heterogeneous contents by a computer hardware device, the method comprising:
providing OTT service for a plurality of heterogeneous contents to the OTT device of a subscriber;
identifying contents search request by user operation on the OTT device;
performing universal contents search according to search conditions input by the user for the plurality of contents provided by the OTT service;
hierarchically presenting the result of the universal contents search by categories and attribute groups;
identifying highlight of a specific live channel by remote control operation performed on the result screen of the universal contents search;
decoding video steam currently broadcasting in a live channel in response to user selection operation on the highlighted live channel;
providing thumbnail instant viewing for the highlighted live channel on the result screen of the universal contents search; and
providing contents of the highlighted live channel to main display in response to user selection operation on the display of the thumbnail instant viewing.

7. A non-transitory computer program contained in a non-transitory storage medium comprising program code instructions which execute a contents navigation method for OTT service of heterogeneous contents by a computer hardware device, the method comprising:
providing OTT service for a plurality of heterogeneous contents to the OTT device of a subscriber;
identifying contents search request by user operation on the OTT device;
performing universal contents search according to search conditions input by the user for the plurality of contents provided by the OTT service;
hierarchically presenting the result of the universal contents search by categories and attribute groups;
identifying highlight of a specific live channel by remote control operation performed on the result screen of the universal contents search;
decoding video steam currently broadcasting in a live channel in response to user selection operation on the highlighted live channel;
providing thumbnail instant viewing for the highlighted live channel on the result screen of the universal contents search;
providing contents of the highlighted live channel to main display in response to user selection operation on the display of the thumbnail instant viewing;
removing the thumbnail instant viewing in response to an arrow key operation of the user on a display screen to which the thumbnail instant viewing is provided; and
changing the highlight of a live channel in response to the direction of the arrow key operation.
